# EUROPEAN PATENT SPECIFICATION

(11) **EP 0 806 441 B1**
(45) Date of publication and mention of the grant of the patent: **07.08.2002**
(21) Application number: 97303175.0
(22) Date of filing: 09.05.1997
(51) Int. Cl.: C08F 283/10, C08F 290/06

(54) **Crosslinkable allyl vinyl ester resin compositions**
Vernetzbare Allyl-Vinyl-Esterharzzusammensetzungen
Compositions de résines allyl vinyl ester

(30) Priority: 09.05.1996 GB 9609703
(43) Date of publication of application: 12.11.1997
(73) Proprietor: SCOTT BADER COMPANY LIMITED, Wellingborough Northamptonshire NN9 7RL (GB)
(72) Inventor: Goring, John Oakley, Kettering NN14 4DR (GB); Gray, Neil Richard, Brandon, Durham, Co. Durham DH7 8AG (GB)
(74) Representative: Coleiro, Raymond

(56) References cited:
- DE-A- 3 629 903
- US-A- 4 461 880
- US-A- 5 015 701
- PATENT ABSTRACTS OF JAPAN vol. 010, no. 280 (C-374), 24 September 1986 & JP 61 101518 A (SHOWA HIGHPOLYMER CO LTD), 20 May 1986
- DATABASE WPI Section Ch, Week 8626 Derwent Publications Ltd., London, GB; Class A14, AN 86-167195 XP002093673 & JP 61 101518 A (SHOWA HIGH POLYMER KK) , 20 May 1986

## Description

This invention relates to crosslinkable vinyl ester, especially allyl vinyl ester, resin compositions suitable for use especially as resin concrete or adhesive compositions, but also suitable for use in fibre reinforced plastics mouldings and gel coats. The invention relates also to a range of resins present in such compositions and to methods of preparing such resins and compositions.

It is known to utilise for such purposes a polyester resin composition which comprises an unsaturated polyester resin dissolved in a monomer capable of crosslinking with the unsaturated polyester by free radical polymerisation. The difficulty is that compositions giving the best results, especially cured resins having a tack free surface, high flexural and tensile strength, heat distortion and low solvent and water absorption are obtained using, either wholly or partially, styrene as the crosslinkable monomer. On the other hand, nowadays, with a view to protecting the health of the workforce and improving the general quality of the environment, it is becoming more and more desirable to limit emissions of volatile solvents, especially hydrocarbons with a low flash point, which are also potentially explosive and. may well be toxic. Thus, the use of styrene which, as is well known, has both a high volatility and a low flash point, is undesirable from this point of view. To date, however, replacement of styrene by any other monomer having a sufficiently low volatility and a high flash point has not allowed retention of the excellent properties provided by styrene.

US-A-3564074 discloses a crosslinkable vinyl ester polymer composition comprising a blend of a vinyl ester polymer with an ethylenically unsaturated monomer in which the vinyl ester is prepared by (1) reacting an ethylenically unsaturated monocarboxylic acid with a polyepoxide and thereafter (2) reacting a dicarboxylic acid anhydride with the reaction product of step (1). This second step provides pendant half ester groups as a result of reaction with pendant secondary hydroxyl groups present in the reaction product from step (1). Although this document primarily exemplifies the use of styrene, it contains a list of possible alternative monomers including both monofunctional and difunctional monomers and indeed additionally exemplifies the use of vinyl toluene, orthochlorostyrene and methyl methacrylate.

However, we found that, unless a vinyl aromatic monomer such as styrene is utilised in such a composition, a tack free surface could not be obtained.

For various reasons, attempts have been made to modify polyesters in order to improve their properties. For example, it is known to modify a vinyl ester polymer in order to improve the rate of curing and/or drying. Thus, JP-B-89-050329 discloses a vinyl ester polymer for use in a top coating or primer composition where again (as in step 1 of US-A-3064074 referred to above) the vinyl ester polymer is prepared by reacting an ethylenically unsaturated monocarboxylic acid with a polyepoxide. However, in JP-B-89-050329, this vinyl ester polymer is modified in that at least a part of its terminal ethylenic unsaturation is provided by incorporating into the polymer a difunctional allyl ether component. This is said to provide a quickly drying and quickly curing unsaturated polyester resin having high hardness and abrasion resistance. However, in JP-B-89-050329 and in contrast with US-A-3564074, the polymer is used in this form and is not subjected to a second stage reaction of providing pendant half ester. groups, nor is the polymer incorporated in a free radical - curable composition containing a vinyl monomer.

JP-A-61-101518 discloses cross-linkable compositions containing an allyl vinyl ester resin in an ethylenically unsaturated monomer crosslinkable therewith. The allyl vinyl ester resin is the reaction product of one mole of an epoxylated bis-phenol, e.g. bis-phenol A diglycidyl ether, with one mole of each of (a) (meth)acrylic acid and (b) an allyl glycidyl monoester of a dicarboxylic acid, the pendant hydroxyl groups of which reaction product have been esterified with further component (b), optionally in situ, to obtain pendant terminally unsaturated full ester groups.

In addressing the abovementioned problems associated with the use of styrene, we have surprisingly found a unique allyl vinyl ester resin and a crosslinkable composition containing it which is capable of providing a cured product having the excellent properties associated with the use of styrene as crosslinking monomer, but without necessarily using such a highly volatile and low flash point crosslinkable monomer.

This unique composition has been developed not only by modification of the resin component of the composition, but also, in accordance with preferred embodiments of the invention, by utilisation of a particular range of crosslinking monomers.

Thus, according to a first aspect, the present invention provides a crosslinkable allyl vinyl ester resin composition comprising:
(A) an allyl vinyl ester resin component comprising at least two species of terminally unsaturated residue derived respectively from
   (a) a compound having at least one terminal unsaturated group providing vinyl unsaturation and a carboxylic acid group or a reactive derivative thereof and
   (b) a compound having at least one terminal unsaturated group providing allyl unsaturation and a carboxylic acid group or a reactive derivative thereof
      each of which species of terminally unsaturated residue is present, independently, in at least one vinyl (i.e. unsaturated) ester compound of the said allyl vinyl ester resin and the or each said unsaturated ester compound comprising additionally
   (c) at least one residue derived from an epoxy compound having at least two epoxy groups and capable of reaction with a carboxylic acid or reactive derivative thereof, and
(d) at least one half ester group pendant from an unsaturated ester chain of the unsaturated ester compound; and
(B) an ethylenically unsaturated monomer component, preferably a (meth)acrylate monomer containing at least one group derived from (meth)acrylic acid, cross-linkable with the allyl vinyl ester resin component.

The compound (a) is a compound having a terminal vinyl group and a carboxylic acid group, for example, (meth)acrylic acid (i.e. acrylic or methacrylic acid). However, it is preferably the reaction product of (I) a C₁₋₅ alkyl ester of (meth)acrylic acid substituted by a functional group capable of reaction with a carboxylic acid, which compound (I) may be hydroxyethyl acrylate or methacrylate, and (II) a carboxylic acid, preferably a dicarboxylic acid, or a reactive derivative thereof, which compound (II) may be phthalic or maleic acid or a reactive derivative thereof.

The compound (b) may be any compound having a terminal allyl, preferably allyl ether, group and a carboxylic acid group, but is preferably the reaction product of (III) a compound having (i) a functional group capable of reaction with a carboxylic acid and (ii) at least one terminal allyl ether group and (IV) a carboxylic acid, preferably a dicarboxylic acid, or a reactive derivative thereof.

The or at least one said unsaturated ester compound may comprise additionally at least one residue derived from a glycol.

The or at least one said pendant half-ester group may be derived from phthalic or maleic acid or a reactive derivative thereof.

According to a second aspect of the invention, there is provided an allyl vinyl ester resin component comprising at least two species of terminally unsaturated residue derived respectively from
(a) a compound having at least one terminal unsaturated group providing vinyl unsaturation and a carboxylic acid group or a reactive derivative thereof, which compound (a) is the reaction product of (I) a C₁₋₅ alkyl ester of (meth)acrylic acid substituted by a functional group capable of reaction with a carboxylic acid group or a reactive derivative thereof and (II) a dicarboxylic acid or a reactive derivative thereof, and
(b) a compound having at least one terminal unsaturated group providing allyl unsaturation and a carboxylic acid group or a reactive derivative thereof,
   each of which species of terminally unsaturated residue is present, independently, in at least one unsaturated ester compound of the said allyl vinyl ester resin and the or each said unsaturated ester compound comprising additionally
(c) at least one residue derived from an epoxy compound having at least two epoxy groups and capable of reaction with a carboxylic acid or reactive derivative thereof, and
(d) at least one half ester group pendant from an unsaturated ester chain of the unsaturated ester compound.

The vinyl ester (I) component of compound (a) may be derived from hydroxyethyl acrylate or methacrylate.

The dicarboxylic acid (II) component of compound (a) may be derived from phthalic or maleic acid or a derivative thereof.

The or at least one said unsaturated ester compound may comprise additionally at least one residue derived from a glycol.

The or at least one said pendant half-ester group may be derived from a phthalic or maleic acid or a reactive derivative thereof.

In particular, a preferred embodiment of this first aspect of the present invention provides an allyl vinyl ester resin comprising at least two species of terminally unsaturated residue derived respectively from
(1) a C₁₋₅ alkyl ester of (meth)acrylic acid (i.e. acrylic or methacrylic acid) substituted by a functional group capable of reaction with a carboxylic acid or a reactive derivative thereof and
(2) a compound having (i) a functional group capable of reaction with a carboxylic acid or reactive derivative thereof and (ii) at least one terminal allyl ether group,
   each of which species of terminally unsaturated residue is present, independently, in at least one vinyl (i.e. unsaturated) ester compound of the said allyl vinyl ester resin and the or each said unsaturated ester compound comprising additionally
(3) at least one residue derived from a dicarboxylic acid or a reactive derivative thereof,
(4) at least one residue derived from an epoxy compound having at least two epoxy groups and capable of reaction with a carboxylic acid or reactive derivative thereof, and
(5) at least one half ester group pendant from an unsaturated ester chain of the unsaturated ester compound.

At least one said vinyl ester compound, i.e. compound having each of an unsaturated group and an ester group, may be a compound in which at least one polymerisable unsaturated group is provided at one terminal end by an allyl residue and at least one polymerisable unsaturated group is provided at the other terminal end by a vinyl residue. However, alternatively, the resin may be a mixture of unsaturated ester compounds, one having terminal unsaturation provided by allyl residues and the other provided by vinyl residues. Thus, when the allyl vinyl ester resin is a mixture of unsaturated ester compounds, each of the allyl and vinyl residues may be present in any one such ester compound independently of the other residues, provided that the total resin has both allyl and vinyl residues.

Typically, the allyl vinyl ester resin comprises at least three ester compounds each having terminal ethylenic unsaturation (i.e. providing a terminal double bond capable of polymerisation), each compound having at least one residue (3) derived from a dicarboxylic acid or reactive derivative thereof, at least one residue (4) derived from an epoxy compound having at least two epoxy groups, at least one pendant half ester group (5) and unsaturated groups at respective terminal ends, a first of the three unsaturated ester compounds having at each terminal end terminal ethylenic unsaturation provided by at least one allyl group, a second of the three unsaturated ester compounds having at one terminal end terminal ethylenic unsaturation provided by at least one allyl group and at the other terminal end ethylenic unsaturation provided by a vinyl group and a third of the three unsaturated ester compounds having at each terminal end terminal ethylenic unsaturation provided by a vinyl group, each of the respective allyl and vinyl groups thereby providing respective said terminal unsaturated groups in the said unsaturated ester compounds.

In each of the first and second aspects of the invention, the compound (b) may be the reaction product of (III) a compound having at least one allyl ether group and a functional group capable of reaction with a carboxylic acid group or a reactive derivative thereof and (IV) a dicarboxylic acid or a reactive derivative thereof.

The allyl ether compound (III) may have only one functional group, namely a hydroxyl group and may have two allyl groups.

The allyl ether compound (III) may be selected from trimethylol propane allyl ether, trimethylol propane diallyl ether, trimethylol ethane diallyl ether, ethylene glycol allyl ether, diethylene glycol allyl ether, glycerol diallyl ether, 1,2,6-hexane triol diallyl ether and pentaerythritol tri-allyl ether.

The carboxylic acid compound (IV) may be phthalic or maleic acid or a reactive derivative thereof.

According to a third aspect, the invention provides a method of preparing an allyl vinyl ester resin, which method comprises the steps of
(*I*) reacting each of
   (a) a compound having at least one terminal unsaturated group providing vinyl unsaturation and a carboxylic acid group or a reactive derivative thereof, which compound (a) is the reaction product of (I) a C₁₋₅alkyl ester of (meth)acrylic acid substituted by a functional group capable of reaction with a carboxylic acid group or a reactive derivative thereof and (II) a dicarboxylic acid or a reactive derivative thereof, and
   (b) a compound having at least one terminal group providing allyl unsaturation and a carboxylic acid group or a reactive derivative thereof with (c) an epoxy compound having at least two epoxy groups to form at least one unsaturated ester compound having at least one pendant hydroxyl group, the said unsaturated ester compound, or the said unsaturated ester compounds together, providing terminal allyl and vinyl residues so as to obtain an allyl vinyl ester resin; and
*(II)* reacting the said allyl vinyl ester resin from step (*I*) with (d) a dicarboxylic acid or reactive derivative thereof, preferably an anhydride thereof, capable of reaction with the or each said pendant hydroxyl group so as to provide on the or each said compound at least one pendant half ester group.

According to a fourth aspect, the invention provides a method of preparing a cross-linkable allyl vinyl ester resin composition, which method comprises blending together each of
(A) an allyl vinyl ester resin component comprising at least two species of terminally unsaturated residue derived respectively from
   (a) a compound having at least one terminal unsaturated group providing vinyl unsaturation and a carboxylic acid group or a reactive derivative thereof and
   (b) a compound having at least one terminal unsaturated group providing allyl unsaturation and a carboxylic acid group or a reactive derivative thereof,
      each of which species of terminally unsaturated residue is present, independently, in at least one unsaturated ester compound of the said allyl vinyl ester resin and the or each said unsaturated ester compound comprising additionally
   (c) at least one residue derived from an epoxy compound having at least two epoxy groups and capable of reaction with a carboxylic acid or reactive derivative thereof, and
   (d) at least one half ester group pendant from an unsaturated ester chain of the unsaturated ester compound;
(B) an ethylenically unsaturated monomer component cross-linkable with the allyl vinyl resin component; and additionally optionally
(C) at least one of an accelerator and a free radical initiator.

The ethylenically unsaturated crosslinkable monomer component (B) is preferably a (meth) acrylate monomer having at least one group derived from (meth)acrylic acid.

This method may comprise the additional preliminary steps of:
(*I*) reacting each of
   (a) a compound having at least one terminal unsaturated group providing vinyl unsaturation and a carboxylic acid group or a reactive derivative thereof and (b) a compound having at least one terminal unsaturated group providing allyl unsaturation and a carboxylic acid group or a reactive derivative thereof with (c) an epoxy compound having at least two epoxy groups to form at least one unsaturated ester compound having at least one pendant hydroxyl group, the said unsaturated ester compound, or the said unsaturated ester compounds together, providing terminal allyl and vinyl residues to produce an allyl vinyl ester resin; and
(*II*) reacting the said allyl vinyl ester resin from step (I) with (d) a dicarboxylic acid or reactive derivative thereof capable of reaction with the or each said pendant hydroxyl group to form on the or each said compound at least one pendant half ester group and thereby produce the said allyl vinyl ester resin component.

In the above reaction, compound (a) may be (meth)acrylic acid and compound (b) a compound which is the reaction product of a compound (III) having at least one terminal allyl, preferably allyl ether, group and an acid reactive functional group and (IV) a dicarboxylic acid. In such a case, care must be taken not to mix the (meth)acrylic acid with the allyl compound (III) until after its acid functional group has reacted with a carboxylic group of dicarboxylic acid (IV).

A particularly preferred embodiment of the above third aspect of the invention provides a method of preparing an allyl vinyl ester resin, which method comprises the steps of
(1) reacting respective proportional amounts of a first dicarboxylic acid compound, or reactive derivative thereof, with each of
   (a) a C₁₋₅ alkyl ester of (meth)acrylic acid having a substituent group capable of reaction with the first dicarboxylic acid compound or reactive derivative thereof and
   (b) a compound having a functional group capable of reacting with the first dicarboxylic acid compound or reactive derivative thereof and at least one terminal allyl ether group,
   to form respective unsaturated monocarboxylic acid compounds,
(2) reacting each respective said unsaturated monocarboxylic acid compound with an epoxy compound having at least two epoxy groups to form at least one unsaturated ester compound having at least one pendant hydroxyl group, the said unsaturated ester compound, or the said unsaturated ester compounds together, providing terminal allyl and vinyl residues so as to obtain an allyl vinyl ester resin; and at least one, preferably each, of the following steps:
(3) reacting the said allyl vinyl ester resin from step (2) with a second dicarboxylic acid or reactive derivative thereof, preferably an anhydride thereof, capable of reaction with the or each said pendant hydroxyl group so as to provide on the or each said compound at least one pendant half ester group,
   the said first dicarboxylic acid or reactive derivative thereof being the same as or different from the said second dicarboxylic acid or reactive derivative thereof; and
(4) blending the allyl vinyl ester resin from step (2) or, when carried out, step (3), with an unsaturated crosslinkable monomer, which monomer is preferably a (meth)acrylate monomer having at least one group derived from (meth)acrylic acid, and optionally including additionally a free radical initiator and additionally optionally including an accelerator.

Optionally, in step (1), a proportional amount of the said first dicarboxylic acid or reactive derivative thereof may be reacted additionally with
(f) a glycol to form a monocarboxylic acid monoester.

In carrying out step (1), respective amounts of the first dicarboxylic acid or reactive derivative thereof can be reacted separately with each of, or only two of, the respective compounds (a), (b) and (f) or all of the first dicarboxylic acid or reactive derivative can be reacted with a mixture of each of compounds (a), (b) and (f).

At least for reaction of the first dicarboxylic acid or reactive derivative thereof with compounds (a) and (b) it is preferred to react a proportional amount of the first dicarboxylic acid or reactive derivative thereof with one of compounds (a) and (b), more preferably compound (a), and thereafter to add to the reaction mixture, still containing another proportional amount of the first dicarboxylic acid or reactive derivative thereof, the other compound, more preferably compound (b).

It is preferred, in step (1), to add compound (a) prior to compound (b) so as to allow as complete a reaction as possible of compound (a) in order to reduce the toxicity potential of the end product. Indeed, we have found that this staged addition may reduce the amount of free compound (a) by a factor of 10.

In any event, it is especially preferred that the respective unsaturated monocarboxylic acids thus produced are in admixture prior to step (2).

In step (1), the first dicarboxylic acid or reactive derivative thereof is preferably an anhydride of a dicarboxylic acid, more preferably phthalic or maleic anhydride. In particular, since phthalic anhydride alone has a melting point as high as 132°C, it is especially preferred to use, as the anhydride component, a mixture of phthalic and maleic anhydrides, the presence of the maleic anhydride in admixture reducing the temperature at which the anhydride component becomes fluid. By adjusting the proportion of maleic anhydride in the mixture, it is possible to render the mixture sufficiently fluid at a temperature below the reaction temperature for step (1) to achieve efficient mixing of the reaction components prior to reaction. In particular, the use of solid pelleted anhydrides is not environmentally desirable, whereas the use of such molten anhydride mixtures allows application of a pumped closed system. A preferred amount of maleic anhydride incorporated with the phthalic anhydride is from 30 to 60, more preferably from 40 to 50, especially preferably 45, parts by weight maleic anhydride per 100 parts by weight phthalic anhydride. This enables the other reactants, especially compound (a) to be added at a sufficiently low temperature, for example 75°C, to avoid causing an excessive exotherm.

In step (1) compound (a) is a C₁₋₅ alkyl ester of (meth) acrylic acid having a substituent group, preferably a hydroxyl group, capable of reaction with the first dicarboxylic acid compound, or reactive derivative thereof. Compound (a) is preferably hydroxyethyl acrylate or methacrylate. Hydroxyethyl acrylate is especially preferred because of its higher reactivity on crosslinking, thereby reducing the amount of free monomer present in a crosslinked product. This gives at least one advantage of a minimum toxicity potential.

Compound (b) is a compound having a functional group, preferably a hydroxyl group, capable of reaction with the first dicarboxylic acid compound or reactive derivative thereof and having at least one terminal allyl ether group. Compound (b) is preferably an allyl substituted alcohol having from 1 to 4 hydroxyl group(s) at least one hydroxyl group being substituted by an allyl group, to form a or a respective allyl ether group, and at least one being a free hydroxyl group. Examples of more preferred compounds (b) are trimethylol propane allyl ether, trimethylol propane diallyl ether, trimethylol ethane diallyl ether, ethylene glycol allyl ether, diethylene glycol allyl ether, glycerol diallyl ether, 1,2,6-hexane triol diallyl ether and pentaerythritol tri-allyl ether.

Polyallyl ethers having only one hydroxyl group are preferred, as are those having at least two allyl ether groups. Those having only one hydroxyl group and at least two allyl ether groups are especially preferred.

The respective proportional amounts relative to one another of compounds (a) and (b) present in the reaction mixture, expressed as a molar ratio of compound (a):(b), are preferably in the range of from 90:10 to 10:90, more preferably 80:20 to 50:50, especially 65:35 to 75:25.

As the proportional amount of component (a) increases, so the tensile properties of a cured resin composition containing the allyl vinyl ester resin increase. However, as the amount of component (b) increases, so the cured product becomes less tacky.

Where, as is preferred, the first dicarboxylic acid compound or reactive derivative thereof is an anhydride of a dicarboxylic acid, compounds (a) and (b) are each preferably selected for their ability to react with the acid anhydride at a temperature of about 90-130°C, more preferably 100-120°C.

In such a reaction ring opening of the dicarboxylic acid anhydride takes place on reaction with compound (a) or (b) to form an unsaturated monocarboxylic acid compound. This reaction is preferably carried out at a temperature of from 90∼120°C in the presence of an inhibitor, preferably hydroquinone or a derivative thereof and/or a phenol or derivative thereof, for example p-methoxyphenol.

In an alternative method of carrying out step (1), the first dicarboxylic acid or reactive derivative thereof is a (C₁₋₆ alkylene) or phenylene dicarboxylic acid and a compound (f), preferably a C₁₋₆ alkylenediol, is additionally reacted. Again, the product is an unsaturated monocarboxylic acid compound.

The final product of step (1) preferably has an acid value of at least 170, more preferably 175-190, mgKOH/g, but also a hydroxyl value of at least 10, preferably 18-33 mgKOH/g, provided by an excess of compound (a) + (b), leaving in the final product of step (1) a slight excess, preferably of compound (b). By providing such a hydroxyl functionality, chain extension of the epoxy compound in step (2) is minimised. In this manner, a reaction is encouraged in which the epoxy compound employed in step (2) is end capped with the monofunctional acid product from step (1), as opposed to a reaction in which epoxy is linked to epoxy by a difunctional acid species.

In step (2), the reaction product of step (1) is reacted with an epoxy compound having at least two epoxy groups. The epoxy compound may have a molecular weight ≤1,500, preferably ≤1,000, more preferably ≤800. However, the desired molecular weight depends upon the number of epoxy groups present and is preferably chosen in dependence upon the molar mass per epoxy group, hereinafter referred to as the "epoxy molar mass" (EMM). For example, if, as is preferred, the epoxy compound is a diepoxy compound, the EMM will be half the molecular weight. A preferred EMM is ≤750, more preferably ≤500, still more preferably ≤400. The epoxy may be an aliphatic epoxy or an aromatic epoxy optionally additionally containing alkylene groups. Diglycidyl ethers of bisphenol compounds are preferred and, in particular, diglycidyl ethers of bisphenol A (hereinafter sometimes referred to as "BADGE") are especially preferred for providing improved chain stiffness and good durability to the final cured product. A more preferred BADGE has the formula

Epoxy-Bisphenol A-(Bisphenol A)ₙ-Epoxy

where n is zero or at least 1. Still more preferably n is 0 or 1.

Typical diglycidyl ethers of bisphenol A available commercially are Epikote 828 RTM(EMM 182-194), the reaction product of bisphenol A and epichlorohydrin, and the higher molecular weight analogues Epikote RTM 834 and Epikote RTM 1001 [a bisphenol A-diglycidyl ether (EMM 450-500)], DER 331 (EMM 182-192) and DER RTM 330 (EMM 177-188).

Other alternative preferred epoxy components are bisphenol A/bisphenol F blends, for example, DER RTM 351 (EMM 170-183) and DER RTM 352 (EMM 175-185), epoxy novalak resins, such as DEN RTM 431 (EMM 172-191) and halogenated BADGE resins, such as DER RTM 511 and DER RTM 542.

The above mentioned Epikote RTM resins are commercially available from Shell and the DER RTM and DEN RTM resins from Dow.

In carrying out step (2), the epoxy compound is reacted with the product of step (1), preferably in the presence of a catalyst or mixture thereof, and preferably at a temperature of from 100 to 150°C, especially 110 to 130°C until the acid value is no more than, say, 40 mgKOH/g, theoretically 0. The molar ratio of the product of step (1):polyepoxy compound is preferably from 60:40 to 75:25, more preferably about 2:1.

When such a molar excess of unsaturated monocarboxylic acid from step (1) :polyepoxide compound is present, the final product of step (2) may then be an oligomeric resin comprising a mixture of compounds having terminal unsaturation at both ends, which terminal unsaturation in each such compound may be provided by respective residues, one of compound (a) and the other of compound (b) or each of the compounds (a) and (b).

The allyl vinyl ester resin produced in step (2) comprises at least one compound having at least one pendant hydroxyl group resulting from the reaction between the carboxyl groups present on the reaction product of step (1) and the epoxy compound added in step (2). In step (3), at least a proportion of these are converted to pendant half-ester groups by reaction of the product of step (2) with a dicarboxylic acid or reactive derivative thereof, preferably an anhydride of a dicarboxylic acid, more preferably phthalic or maleic anhydride, especially phthalic anhydride, when ring opening of the dicarboxylic anhydride takes place.

If an acid anhydride is used, reaction of step (3) may be carried out by merely maintaining the temperature of the reaction mixture at a temperature within the range set out for step (2) above, more preferably at the same temperature as that employed for step (2). The amount of anhydride at this stage may be carefully chosen to increase the acid value by 25-50 mgKOH/g, preferably 25-40 mgKOH/g, which may give a practical acid value range of 20-90, preferably 25-80, most preferably 60-70 mgKOH/g.

The resultant allyl vinyl ester resin comprising at least one unsaturated ester compound having pendant half-ester groups has a structure more open than the product of step (2) and allows better crosslinking with a copolymerisable monomer.

Again, although not wishing to be bound by theory it is believed that the change in polarity, hydroxyl value and acidity caused by the presence of the half-ester groups also provides better adhesion to a substrate when the cured product is used as a grouting composition.

Thus, in an embodiment of the fourth aspect of the invention a crosslinkable allyl vinyl ester resin composition is prepared by a method comprising blending with the allyl vinyl ester resin prepared above an ethylenically unsaturated crosslinkable monomer, which monomer is preferably a (meth)acrylate monomer having at least one group, more preferably at least two groups, derived from (meth)acrylic acid, and optionally including additionally at least one of a free radical initiator and an accelerator.

Thus, the copolymerisable monomer may be any conventional crosslinkable monomer such as a vinyl aromatic monomer, e.g. styrene, vinyl toluene or t-butyl styrene. However, preferably the monomer is a mono-, di- or tri-functional (meth)acrylate. More preferably, di(meth)acrylates are employed. Examples of compounds which are especially preferred are mono-, di- or tri-ethylene glycol dimethacrylates, propylene glycol analogues thereof and, most especially, 1,3-butylene glycol dimethacrylate. Each of these compounds may be used alone or in admixture. In particular, a blend of monoacrylates or methacrylates may allow a close control of crosslinked density. In addition to the (meth)acrylate, other monomers, for example, a vinyl aromatic monomer may be included. For example, the monomer (B) may be a mixture of styrene and 1,3-butyleneglycol dimethacrylate.

However, it is especially preferred to use a bifunctional crosslinking (meth)acrylate monomer such as 1,3-butylene glycol dimethacrylate. In particular, this monomer has a low volatility, high flash point and low toxicity.

Since monomers such as 1,3-butylene glycol dimethacrylate are relatively large molecules, we expected that a relatively large proportion, for example 60% by weight of total resin composition would be necessary to achieve a composition having a sufficiently low viscosity. However, we find surprisingly that an acceptably low viscosity can be achieved using such monomers present in proportional amounts at most only slightly, and possibly no, higher than those employed when using styrene.

Preferably, the monomer is present in the composition in an amount, by weight of total weight of the allyl vinyl ester resin and monomer component, of from 35 to 60 wt%, preferably 40-55 wt%. For example, a solution of an allyl vinyl ester resin derived from hydroxyethyl acrylate and trimethylolpropane diallyl ether, phthalic anhydride and Epikote RTM 828 in 1,3-butylene glycol dimethacrylate monomer containing 45 wt% of monomer has a viscosity of only 6 poise.

Although not wishing to be bound by theory, it is believed that such monomers may have a greater "cutting power", owing to their polarity, allowing easier solubility of polymer in monomer.

In addition, conventional polyesters provide a particularly dense structure when crosslinked, so that efficient crosslinking can take place only when the temperature is raised above ambient temperature in a post cure. The addition of a proportion of difunctional monomer would make the achievement of full cure even more difficult.

In contrast, by incorporation of the terminal allyl ether residues in accordance with the invention, crosslinking may be carried out at ambient temperature even when using only a bifunctional monomer. Although not wishing to be bound by theory, it is believed that this is due to the less dense crosslinking structure provided by the more open network resulting from incorporation of the allyl ether residue.

Curing of the composition is preferably carried out by free radical polymerisation using a free radical initiator, more preferably a peroxide initiator. It is also preferable to employ at least one curing accelerator.

Preferred peroxide initiators are benzoyl peroxide and ketone peroxides, especially methyl ethyl ketone peroxide.

Preferred accelerators are amine accelerators, especially tertiary aromatic amines and metal salt accelerators, especially cobalt octoate and naphthenate, and may depend upon the choice of reaction conditions and choice of accelerator.

The choice of a particular cure system will depend upon the particular desired application.

For example, for adhesive and hot cure applications, a preferred initiator is benzoyl peroxide. Any of the well known accelerators for cure with benzoyl peroxide, for example, an amine, especially a tertiary aromatic amine may be employed. However, especially when the composition is to be used as an adhesive, a preferred amine accelerator, especially for use with benzoyl peroxide, is an epoxy-amine adduct. This benzoyl peroxide/epoxy-amine adduct cure system is particularly aggressive and speeds up the gel time and rate of cure. Curing may then be carried out at ambient temperature and is particularly effective at a temperature of, for example, -5°C to +25°C.

The epoxy moiety of the epoxy-amine accelerator may be any stable epoxy compound having two or more epoxy groups. Preferred epoxy compounds may be selected from any of those referred to above in relation to the epoxy compound used in step (2).

The amine moiety of the epoxy-amine adduct is preferably a substituted primary aromatic amine, more preferably p-toluidine.

However, for some applications, other cure systems may be more appropriate. For example, for cold cure systems and for FRP, especially when discolouration is to be minimized, the use of a peroxide, e.g. ketone peroxide initiator/metal salt accelerator system, which for some applications may additionally include a coaccelerator, may be particularly suitable. A preferred ketone peroxide initiator is methyl ethyl ketone peroxide (MEKP), while a preferred metal salt accelerator is cobalt octoate or naphthenate, especially cobalt octoate. A preferred co-accelerator is an amine, especially an aromatic amine such as any well known to those in the art. An especially preferred aromatic amine is a tertiary aromatic amine, more especially dimethyl aniline.

Free radical cure systems other than those mentioned above which may prove useful are cumene hydroperoxide/cobalt metal salt, acetyl acetone peroxide/cobalt metal salt and cyclohexanone peroxide/amine.

In general an allyl vinyl ester resin composition embodying the invention comprises at least an allyl vinyl ester resin (A) as hereinbefore defined and an ethylenically unsaturated monomer (B).

When the initiator/accelerator system contains an epoxy-amine adduct (as previously described) as accelerator, this can be included in the composition during its manufacture, for example, in step (4) of the preparative process previously described, to provide a stable composition. In that event, then only a free radical initiator need be incorporated in the composition immediately prior to application.

However, usually, the cure system comprising each of the free radical initiator, accelerator and any co-accelerator which may be desirable are incorporated in the composition immediately prior to application.

For some applications it is convenient to supply the composition in kit form, for example in two separate packages or, even more conveniently in a cartridge having two compartments containing respectively the resin composition and the cure system. The components in the respective compartments may be brought together by the mechanical destruction of the cartridge, as when inserting a rock bolt into a rock bolt hole or by extrusion through a static mixer, as when grouting or mixing.

An allyl vinyl ester resin composition embodying the invention may contain any of the additives conventionally present in unsaturated resin compositions in dependence upon their intended application for example, fillers, thixotropic agents, colourants, mould release agents and low profile additives.

In particular, the resin may be blended with other resins, especially other free radical curable unsaturated resins, e.g. acrylic unsaturated polyester and vinyl ester resins and in the manner provide a degree of improvement in the properties of the resin in dependence upon the intended application.

Especially for securing rock bolts, the composition may contain from 40 to 80% by weight of the total weight of the composition of a filler. If the composition contains less than about 60% by weight of filler; it preferably comprises additionally up to 10% by weight, more preferably from 2 to 6% by weight, of a thixotropic agent, such as fumed silica, in order to maintain the desired viscosity both for transportation and storage and during application.

Preferred embodiments of the present invention will now be described in more detail with the reference following Examples.

### Examples 1 - 5

### Influence of allyl ether and vinyl ether unsaturation

### (A) Presence or Absence

### Example 1

### Step 1

To a 5L. reactor fitted with a stirrer, reflux condenser, inert gas inlet and equipment for heating and cooling to control the reaction temperature were added each of hydroxy ethyl acrylate (372.8 g., 3.21 mol.), phthalic anhydride (605.5 g., 4.09 mol), hydroquinone inhibitor (0.3 g., 2.70 mmol.) and p-methoxy phenol inhibitor (0.18 g., 1.45 mmol.). The temperature was raised to 110-120°C and held for one hour. Trimethylolpropane diallyl ether (TMPDAE) (299.3 g., 1.40 mol.) was then added, and the reaction continued until the ethylenically unsaturated monocarboxylic acid product thus produced had an acid value (A.V.) of 175-190mgKOH/g.

### Step 2

Epikote RTM 828, a commercially available bis-epoxy resin, which is the reaction product of bisphenol A and epichlorohydrin (765.1 g., 4.09 equiv.), benzyl triphenyl phosphonium chloride (1.46 g., 3.75 mmol.) and benzotriazole catalysts (0.36 g., 3.02 mmol.) were added to the product of Step 1 and the temperature raised and controlled at 120°C until the A.V. dropped to <40 mgKOH/g. The resulting product was an allyl vinyl ester resin having pendant hydroxyl groups.

### Step 3

Phthalic anhydride (216.3 g., 1.46 mol.), p-methoxy phenol (0.18 g., 1.45 mmol.) and hydroquinone (0.05 g., 0.45 mmol.) were added to the product of Step 2 and the temperature was held at 120°C until the A.V. was 55-80 mgKOH/g. The final allyl vinyl ester resin having pendant half-ester groups was cooled to about 100°C.

### Step 4

The reaction product of Step 3 was mixed with 1,3-butylene glycol dimethacrylate (1,3-BGDMA) (2625 g., 11.61 mol.) and Crystic RTM D3726A (153.0 g.), an amine accelerator which is an adduct of an epoxy resin and p-toluidine, commercially available from Scott Bader Company Limited, and 1,4-naphthoquinone (0.45 g., 2.85 mmol.). The resulting crosslinkable composition was cooled to ambient temperature and discharged. The viscosity was 4.0 poise at 25°C, measured using an ICI cone and plate viscometer, which records viscosity on a scale of 0-10 poise.

### Step 5

Using a 50% active benzoyl peroxide initiator, added at 2% on resin weight, the composition prepared in Step 4 was cured to give a tack-free casting at ambient temperature.

### Examples 2-3 (Comparative)

The reaction steps carried out as described in Example 1 were repeated except that, in Step 1, a single stage reaction was carried out using only trimethylolpropane diallyl ether (Example 2) and using only hydroxyethyl acrylate (Example 3).

For the purposes of comparison, the degree of cure of the castings was equalised by post-curing, for 24 hours at ambient temperature followed by 3 hours at 80°C.

The results achieved for each of Examples 1-3 are shown in Table 1 below.

As can be seen in Example 1 carried out in accordance with the invention, a casting having a tensile modulus considerably higher than those of (Comparative) Examples 2 and 3 was obtained, while at the same time maintaining acceptable characteristics in general.

**Table 1**

| Property | British Standard Test No | Example 1 | Example 2 (Comparative) | Example 3 (Comparative) |
|---|---|---|---|---|
| Tensile Modulus (MPa) | BS2782 Method 320 | 4117 | 1906 | 4054 |
| Tensile Strength (MPa) | BS2782 Method 320 | 48 | 35 | 55 |
| Elongation (%) | BS2782 Method 320 | 1.3 | 2.9 | 1.5 |
| Barcol Hardness | BS2782 Pt. 10, Method 1001 | 48 | 40 | 50 |
| Heat Deflection Temp.(°C)* | BS2782 Pt. 1, Method 121 A,B,C | 76 | 48 | 84 |
| Water Abs. (mg.) 24 Hr. | BS2782, Pt. 4, Method 430 A-D | 21 | 28.5 | 17 |
| Water Abs. (mg.) 7 Days | BS2782, Pt. 4, Method 430 A-D | 54 | 73 | 52 |

| | | | | |
|---|---|---|---|---|
| *HDT post cure- 24 hrs. at ambient, 3 hrs. at 80°C, 2 hrs. at 120°C, as required by BS2782. | | | | |

### (B) Type of Additive

### Examples 4-5

The reaction steps carried out in Example 1 were repeated except that, in Step 1, the hydroxyethyl acrylate was replaced by an equimolar amount of hydroxyethyl methacrylate (Example 4) or the TMPDAE was replaced by an equimolar amount of trimethylolpropane allyl ether (TMPAE) (Example 5).

Again, as in Examples 1-3, cast samples were post cured for 24 hours at ambient temperature, followed by 3 hours at 80°C.

The standard test methods were as for Examples 1-3 and the results obtained are shown in Table 2.

**Table 2**

| Properties | Example 4 | Example 5 |
|---|---|---|
| Tensile Modulus/MPa | 3977 | 4415 |
| Tensile strength/MPa | 48.98 | 32.31 |
| Elongation/% | 1.38 | 0.78 |
| Barcol Hardness | 54 | 55 |
| HDT/°C | 77.2 | 82.4 |

### Example 6

### Influence of Ester Type in Step 1

The reaction steps carried out in Example 1 were repeated except that, in Step 1, the phthalic anhydride was replaced by an equal weight of a mixture of phthalic anhydride (60 wt%)/maleic anhydride (40 wt%) to give a eutectic mixture which assumes a desired fluidity at a lower temperature than does phthalic anhydride.

As in Examples 1-3, a casting was prepared, post cured and tested. The results are shown in Table 3.

### Example 7

### Influence of Epoxy Resin Type in Step 2

The reaction steps carried out in Example 1 were repeated, except that, in Step 2, the Epikote RTM 828 was replaced by a mixture of Epikote 828 (50 wt%)/Epikote RTM 1001 (50 wt%) so as to give the same molar epoxy group content as in Example 1.

As in Examples 1-3, a casting was prepared, post cured and tested. The results are shown in Table 3.

**Table 3**

| Properties | Example 6 | Example 7 |
|---|---|---|
| Tensile Modulus/MPa | 3640 | 4045 |
| Tensile strength/MPa | 52.34 | 41.18 |
| Elongation/% | 1.57 | 1.10 |
| Barcol Hardness | 51 | 52 |
| HDT/°C | 83.6 | 79.5 |

### Examples 8-12

### Influence of Cross-linkable Monomer

### (A) Effect of Styrene Replacement

### Examples 8-10

The reaction steps carried out in Example 1 were repeated except that, in Step 4, the 1,3-BGDMA was replaced by an equal weight of styrene (Example 8), a styrene (75 wt%)/1,3-BGDMA (25 wt%) mixture (Example 9) or a styrene (25 wt%)/1,3-BGDMA (75 wt %) mixture (Example 10).

As in Examples 1-3, cast samples were prepared, post cured and tested. The results are shown in Table 4.

**Table 4**

| Property | Example 8 | Example 9 | Example 10 |
|---|---|---|---|
| Tensile Modulus/MPa | 2912 | 2768 | 3833 |
| Tensile Strength/MPa | 52.28 | 52.90 | 60.72 |
| Elongation/% | 2.45 | 5.42 | 2.00 |
| Barcol Hardness | 25 | 38 | 50 |
| HDT/°C | 54.7 | 41.8 | 59.5 |

### (B) Influence of Acrylate Monomer Type

### Examples 11-12

The reaction steps carried out in Example 1 were repeated except that, in Step 4, the 1,3-BGDMA was replaced by an equal weight of tri-ethylene glycol dimethacrylate (TEGDMA) (Example 11) or an equal weight of dipropylene glycol dimethacrylate (DPGDA) (Example 12).

As in Examples 1-3, cast samples were prepared, post cured and tested. The results are shown in Table 5.

**Table 5**

| Properties | Example 11 | Example 12 |
|---|---|---|
| Tensile Modulus/MPa | 2584 | 3569 |
| Tensile Strength/MPa | 48.64 | 66.87 |
| Elongation/% | 2.82 | 2.58 |
| Barcol Hardness | 43 | 43 |
| HDT/°C | 55.1 | 70.4 |

### Examples 13-18

### Influence of Cure System

### (A) Influence upon Gel Times

### Examples 13-17

The reaction steps carried out in Example 1 were repeated except that, in Step 4, the amine accelerator was omitted, while in Step 5, the benzoyl peroxide initiator was replaced by a methyl ethyl ketone peroxide (MEKP) initiator/accelerator cure system incorporated together in Step 5, as shown in Table 6 below (% by weight of total resin, including monomer).

Table 6 also gives the gel times, measured at 25°C for each of Examples 13-17 and also for Example 1.

**Table 6**

| Example | Cure system | Gel time | Appearance gelled resin |
|---|---|---|---|
| 1 | 3% Epoxy/p-toluidine adduct (added in Step 4) + 2% (50% active BPO***) (added in Step 5) | 6 mins | smooth, not tacky |
| 13 | 4% Co. Octoate solution*/1,3 BGDMA + 2% (50% MEKP)** | >100 mins | Test abandoned |
| 14 | 4% Co. Octoate solution*/1,3 BGDMA + 4% (50% MEKP)** | 59.7 mins | smooth, not tacky but slightly waxy |
| 15 | 4% Co. Octoate solution*/1.3 BGDMA + 2% (10% Dimethyl aniline/styrene) + 4% (50% MEKP)** | 3.5 mins | smooth, not tacky |
| 16 | 2% Co. Octoate solution*/1,3 BGDMA + 2% (10% Dimethyl aniline/styrene) + 2% (50% MEKP)** | 3.8 mins | smooth, not tacky |
| 17 | 2% Co. Octoate solution*/1,3 DGMDA + 0.5% (10% Dimethyl aniline/styrene) + 2% (50% MEKP)** | 15.0 mins | smooth, not tacky |

| | | | |
|---|---|---|---|
| * Solution in butylene glycol dimethacrylate containing 1% by weight of Co metal. | | | |
| ** Solution in an inert medium. | | | |
| *** Solution in a plasticiser. | | | |

### (B) Influence upon Properties of Casting

### Example 18

The cured resin of Example 17 was post cured and tested as in Example 1. The results are shown in Table 7.

**Table 7**

| Property | Result |
|---|---|
| Tensile Modulus/MPa | 3208 |
| Tensile Strength/MPa | 39.43 |
| Elongation/% | 1.12 |
| Barcol Hardness | 47 |
| HDT/°C | 75 |

### Example 19

### Stability Test

A 60g sample of a resin produced in accordance with Steps 1-4 of Example 1 was placed in a glass jar, which was stored in an oven at 40°C. The resin showed no sign of degradation after as long as 12 months. This renders the product especially suitable for export or for applications in kit form, where a long storage life is necessary, for which such stability for at least 3 months is desirable.

Similarly, a 60g sample of a resin produced in accordance with Steps 1-4 of Example 1, but additionally containing 5% by weight of total composition of Cab-0-Sil TS 720, a hydrophobic fumed silica, as thixotrope, when tested as above, was still liquid after 5 months.

### Examples 20-21

### Application as Rock Bolt Adhesive

### Example 20

A resin composition was prepared by blending a resin prepared as in Example 1, including the initiator, with 70% by weight of the composition, of a ground 200 mesh limestone as a filler and the composition was used to set a bolt in concrete and tested according to the standard test method of ETAG Annex A, Section 5.1, Issue 8th June 1994. The results were as follows:

| | |
|---|---|
| Dry concrete substrate-maximum lead to failure | 43.28 kN |
| Wet concrete substrate-maximum lead to failure | 48.05 kN |

This is a very significant result since rock bolt adhesives currently available commercially tend to fail in wet substrates.

### Example 21

A resin composition was prepared by blending a resin prepared as in Example 1, including the initiator, with 50% 200 mesh ground limestone and 5% fumed silica, respective % being by weight of the total weight of the composition, and the composition was used as a rock bolt anchor in a low filler bolting capsule.

Table 8 gives the compression strength and modulus results, as well as the gel time for a batch prepared in the laboratory and for a typical pilot plant batch.

**Table 8**

| Test | Period after cure | Lab. batch | Pilot plant batch |
|---|---|---|---|
| Gel time/mins/ 20°C/ 2% BPO | - | 10 | 6 |
| Compressive Strength* (Nmm²) | 1 day | 55.0 | 57.3 |
| Compressive Strength* (Nmm²) | 7 days | 66.9 | 65.5 |
| Compressive E Modulus# (GNm²) | 1 day | 5.2 | 4.5 |

| | | | |
|---|---|---|---|
| * BS 2782 Part 8 Method 835C ** ASTM D695-M-C (12.5 X 12.5 X 25mm) | | | |
| # ASTM D695-M-E (12.5 x 12.5 x 25mm) | | | |

The resin of Example 1 also exhibited a higher tensile strength (16 Nmm⁻²) than polyester systems (typically 13-14 Nmm⁻²) or commercially available acrylic systems (typically 10 Nmm⁻²) when compounded into the finished rock bolt anchor.

### Example 22

### Application in GRP

A two layer GRP laminate was made from chopped strand 450 g/m² glass mat coated with a suitable solid binder (so-called "powder bound") and an allyl vinyl ester resin prepared as in Example 10 and containing styrene (75%)/ 1,3 BGDMA (25%) (wt/wt) at a resin/glass ratio 2.5/1. The resin was cured at room temperature with 2% BPO, as in Example 1, step. After 8 hours the laminate was tack free and had a Barcol hardness of 35-40.

A cast disc of the above resin showed no surface tack after 6 hours and exceptionally low volumetric shrinkage. This is important because systems currently available commercially normally exhibit severe shrinkage. In view of this, this resin could prove very promising as a tool making resin.

When the solid content of this resin was measured by heating a known weight of the resin in an oven at 150°C for 1 hour (to evaporate the monomers) a practical value of 74% solids was found. However, the theoretical solids for this system is 50%. Therefore it is postulated that the styrene/1,3 BGDMA blend was achieving some degree of air dry.

As can be seen from the above results, the following advantages can be attained using compositions embodying the invention, namely:-
(a) a free radical crosslinkable resin having a low viscosity, low volatility, high flash point and exceptionally high storage stability; and
(b) a composition which is curable to provide a product

The composition can also be used in resin concrete and castings, especially in flooring applications.

An alternative use is that of providing fibre reinforced plastics (FRP) materials, or indeed gel coats for such mouldings. In particular, in closed moulding processes, its low volatility enables spray or brush applications to be open mould before application or injection of the bulk resin and reinforcement.

It is also particularly useful in hand lay up moulding processes.

## Claims

1. A cross-linkable allyl vinyl ester resin composition comprising:
(A) an allyl vinyl ester resin component comprising at least two species of terminally unsaturated residue derived respectively from
(a) a compound having at least one terminal unsaturated group providing vinyl unsaturation and a carboxylic acid group or a reactive derivative thereof and
(b) a compound having at least one terminal unsaturated group providing allyl unsaturation and a carboxylic acid group or a reactive derivative thereof,
each of which species of terminally unsaturated residue is present, independently, in at least one unsaturated ester compound of the said allyl vinyl ester resin and the or each said unsaturated ester compound comprising additionally
(c) at least one residue derived from an epoxy compound having at least two epoxy groups and capable of reaction with a carboxylic acid or reactive derivative thereof, and
(d) at least one half ester group pendant from an unsaturated ester chain of the unsaturated ester compound; and
(B) an ethylenically unsaturated monomer component cross-linkable with the allyl vinyl resin component.

2. A composition according to claim 1, wherein the compound (a) is (meth)acrylic acid.

3. A composition according to claim 1, wherein the compound (a) is the reaction product of (I) a C₁₋₅ alkyl ester of (meth)acrylic acid substituted by a functional group capable of reaction with a carboxylic acid group or a reactive derivative thereof and (II) a dicarboxylic acid or a reactive derivative thereof.

4. A composition according to claim 3, wherein the said alkyl ester (I) is hydroxy ethyl acrylate or methacrylate.

5. A composition according to claim 3 or claim 4, wherein the dicarboxylic acid (II) is phthalic or maleic acid or a reactive derivative thereof.

6. A composition according to any preceding claim wherein the compound (b) is the reaction product of (III) a compound having at least one allyl ether group and a functional group capable of reaction with a carboxylic acid group or a reactive derivative thereof and (IV) a dicarboxylic acid or a reactive derivative thereof.

7. A composition according to claim 6, wherein the said allyl ether compound (III) has only one said functional group, which functional group is a hydroxyl group.

8. A composition according to claim 6 or claim 7, wherein the sard allyl ether compound (III) has at least two allyl ether groups.

9. A composition according to claim 6 or claim 7, wherein the said allyl ether compound (III) is selected from trimethylol propane allyl ether, trimethylol propane diallyl ether, trimethylol ethane diallyl ether, ethylene glycol allyl ether, diethylene glycol allyl ether, glycerol diallyl ether, 1,2,6-hexane triol diallyl ether and pentaerythritol tri-allyl ether.

10. A composition according to any one of claims 6 to 9, wherein the dicarboxylic acid (IV) is phthalic or maleic acid or a reactive derivative thereof.

11. A composition according to any preceding claim, wherein residues of the said vinyl unsaturated compound (a) and of the said allyl unsaturated compound (b) are present in the total said allyl vinyl ester resin in a molar ratio of compound (a): compound (b) of from 90:10 to 10:90.

12. A composition according to any preceding claim, wherein at least one said residue (c) has an epoxy molar mass ≤ 750.

13. A composition according to any preceding claim, wherein at least one said residue (c) is a diglycidyl ether of a bisphenol compound.

14. A composition according to any preceding claim, wherein at least one said pendant half-ester group (d) is derived from phthalic or maleic acid or a derivative thereof.

15. A composition according to any preceding claim, wherein the or at least one unsaturated ester compound additionally comprises at least one residue derived from a glycol.

16. A composition according to any preceding.claim, wherein at least a proportion of the said monomer component (B) is a (meth)acrylate monomer.

17. A composition according to claim 16, wherein all of the said monomer component (B) is a (meth)acrylate monomer.

18. A composition according to claim 16 or claim 17, wherein the (meth)acrylate monomer contains at least two (meth)acrylate groups.

19. A composition according to claim 18, wherein the (meth)acrylate monomer is 1,3-butylene glycol dimethacrylate.

20. A composition according to claim 15, wherein the monomer component (B) is a mixture of a mono-, di- or tri-functional (meth)acrylate monomer and a vinyl aromatic monomer.

21. A composition according to claim 20, wherein the monomer component (B) is a mixture of styrene and 1,3-butylene glycol dimethacrylate.

22. A composition according to any preceding claim, which additionally comprises a free radical initiator.

23. A composition according to claim 22, wherein the free radical initiator is a peroxide initiator selected from benzoyl peroxide and ketone peroxides.

24. A composition according to any one of claims 14 to 23, which additionally comprises a curing accelerator.

25. A composition according to claim 24, wherein the curing accelerator is an amine.

26. A composition according to claim 25, wherein the amine is a tertiary aromatic amine.

27. A composition according to claim 25, wherein the amine is an epoxy-amine adduct.

28. A composition according to claim 27, wherein the amine of the epoxy resin adduct is a primary aromatic amine.

29. A composition according to claim 27 or claim 28, as appendant to claim 23, wherein the peroxide initiator is benzoyl peroxide.

30. A composition according to claim 24, as appendant to claim 23, wherein the peroxide initiator is a ketone peroxide and the curing accelerator is cobalt octoate or naphthenate.

31. A composition according to claim 30, which additionally comprises an amine as a co-accelerator.

32. A method of preparing a cross-linkable allyl vinyl ester resin composition, which method comprises blending together each of:
(A) an allyl vinyl ester resin component comprising at least two species of terminally unsaturated residue derived respectively from
(a) a compound having at least one terminal unsaturated group providing vinyl unsaturation and a carboxylic acid group or a reactive derivative thereof and
(b) a compound having at least one terminal unsaturated group providing allyl unsaturation and a carboxylic acid group or a reactive derivative thereof,
each of which species of terminally unsaturated residue is present, independently, in at least one unsaturated ester compound of the said allyl vinyl ester resin and the or each said unsaturated ester compound comprising additionally
(c) at least one residue derived from an epoxy compound having at least two epoxy groups and capable of reaction with a carboxylic acid or reactive derivative thereof, and
(d) at least one half ester group pendant from an unsaturated ester chain of the unsaturated ester compound;
(B) an ethylenically unsaturated monomer component cross-linkable with the allyl vinyl resin component; and additionally optionally
(C) at least one of an accelerator and a free radical initiator.

33. A method according to claim 32, which method comprises the preliminary steps of:
(*I*) reacting each of
(a) a compound having at least one terminal unsaturated group providing vinyl unsaturation and a carboxylic acid group or a reactive derivative thereof and
(b) a compound having at least one terminal unsaturated group providing allyl unsaturation and a carboxylic acid group or a reactive derivative thereof with (c) an epoxy compound having at least two epoxy groups to form at least. one unsaturated ester compound having at least one pendant hydroxyl group, the said unsaturated ester compound, or the said unsaturated ester compounds together, providing terminal allyl and vinyl residues to produce an allyl vinyl ester resin; and
(*II*) reacting the said allyl vinyl ester resin from step (*I*) with (d) a dicarboxylic acid or reactive derivative thereof capable of reaction with the or each said pendant hydroxyl group to form on the or each said compound at least one pendant half ester group and thereby produce the said allyl vinyl ester resin component.

34. An allyl vinyl ester resin component comprising at least two species of terminally unsaturated residue derived respectively from
(a) a compound having at least one terminal unsaturated group providing vinyl unsaturation and a carboxylic acid group or a reactive derivative thereof, which compound (a) is the reaction product of (I) a C₁₋₅ alkyl ester of (meth)acrylic acid substituted by a functional group capable of reaction with a carboxylic acid group or a reactive derivative thereof and (II) a dicarboxylic acid or a reactive derivative thereof, and
(b) a compound having at least one terminal unsaturated group providing allyl unsaturation and a carboxylic acid group or a reactive derivative thereof,
each of which species of terminally unsaturated residue is present, independently, in at least one unsaturated ester compound of the said allyl vinyl ester resin and the or each said unsaturated ester compound comprising additionally
(c) at least one residue derived from an epoxy compound having at least two epoxy groups and capable of reaction with a carboxylic acid or reactive derivative thereof, and
(d) at least one half ester group pendant from an unsaturated ester chain of the unsaturated ester compound.

35. An allyl vinyl ester resin according to claim 34, wherein the alkyl ester (I) component of compound (a) is derived from hydroxyl ethyl acrylate or methacrylate.

36. An allyl vinyl ester resin according to claim 34 or claim 35, wherein the dicarboxylic acid (II) component of compound (a) is phthalic or maleic acid or a reactive derivative thereof.

37. An allyl vinyl ester resin according to any preceding claim wherein the compound (b) is the reaction product of (III) a compound having at least one allyl ether group and a functional group capable of reaction with a carboxylic acid group or a reactive derivative thereof and (IV) a dicarboxylic acid or a reactive derivative thereof.

38. An allyl vinyl ester resin according to claim 37, wherein the said allyl ether compound (III) has only one said functional group, which functional group is a hydroxyl group.

39. An allyl vinyl ester resin according to claim 37 or claim 38, wherein the said allyl ether compound (III) has at least two allyl ether groups.

40. An allyl vinyl ester resin according to claim 37, wherein the said allyl ether compound (III) is selected from trimethylol propane allyl ether, trimethylol propane diallyl ether, trimethylol ethane diallyl ether, ethylene glycol allyl ether, diethylene glycol allyl ether, glycerol diallyl ether, 1,2,6-hexane triol diallyl ether and pentaerythritol tri-allyl ether.

41. An allyl vinyl ester resin according to any one of claims 37 to 40, wherein the dicarboxylic acid (IV) is phthalic or maleic acid or a reactive derivative thereof.

42. An allyl vinyl ester resin according to any one of claims 34 to 41, wherein residues of the said vinyl unsaturated compound (a) and of the said allyl unsaturated compound (b) are present in the total said allyl vinyl ester resin in a molar ratio or compound (a): compound (b) of from 90:10 to 10:90.

43. An allyl vinyl ester resin according to any one of claims 34 to 42, wherein at least one said residue (c) has an epoxy molar mass ≤ 750.

44. An allyl vinyl ester resin according to any one of claims 34 to 43, wherein at least one said residue (c) is a diglycidyl ether of a bisphenol compound.

45. An allyl vinyl ester resin according to any one of claims 34 to 44, wherein at least one said pendant half-ester group (d) is derived from phthalic or maleic acid or a derivative thereof.

46. An allyl vinyl ester resin according to any one of claims 34 to 45, wherein the or at least one unsaturated ester compound additionally comprises at least one residue derived from a glycol.

47. A method of preparing an allyl vinyl ester resin, which method comprises the steps of:
(*I*) reacting each of
(a) a compound having at least one terminal unsaturated group providing vinyl unsaturation and a carboxylic acid group or a reactive derivative thereof, which compound (a) is the reaction product of (I) a C₁₋₅ alkyl ester of (meth)acrylic acid substituted by a functional group capable of reaction with a carboxylic acid group or a reactive derivative thereof and (II) a dicarboxylic acid or a reactive derivative thereof, and (b) a compound having at least one terminal unsaturated group providing allyl unsaturation and a carboxylic acid group or a reactive derivative thereof with (c) an epoxy compound. having at least two epoxy groups to form at least one unsaturated ester compound having at least one pendant hydroxyl group, the said unsaturated ester compound, or the said unsaturated ester compounds together, providing terminal allyl and vinyl residues to obtain an allyl vinyl ester resin; and
(*II*) reacting the said allyl vinyl ester resin from step (1) with (d) a dicarboxylic acid or reactive derivative thereof capable of reaction with the or each said pendant hydroxyl group to form on the or each said compound at least one pendant half ester group.

## Patentansprüche

1. Vernetzbare Allylvinylester-Harzzusammensetzung, umfassend:
(A) eine Allylvinylester-Harzkomponente, die zumindest zwei Spezies von endständig ungesättigten Resten umfasst, die abgeleitet sind von
(a) einer Verbindung mit zumindest einer endständig ungesättigten Gruppe, die Vinyl-Unsättigung bereitstellt, und einer Carbonsäuregruppe oder einem reaktiven Derivat davon, und
(b) einer Verbindung mit zumindest einer endständig ungesättigten Gruppe, die Allyl-Unsättigung bereitstellt, und einer Carbonsäuregruppe oder einem reaktiven Derivat davon,
wobei jede Spezies von endständig ungesättigten Resten unabhängig voneinander in zumindest einer ungesättigten Esterverbindung des Allylvinylesterharzes enthalten ist und die oder jede ungesättigte Esterverbindung zusätzlich umfasst:
(c) zumindest einen Rest, der von einer Epoxyverbindung herrührt, die zumindest zwei Epoxygruppen aufweist und zur Reaktion mit einer Carbonsäure oder einem reaktiven Derivat davon fähig ist, und
(d) zumindest eine Halbestergruppe, die an eine ungesättigte Esterkette der ungesättigen Esterverbindung gebunden ist; und
(B) eine ethylenisch ungesättigte Monomerkomponente, die mit der Allylvinylharz-Komponente vernetzbar ist.

2. Zusammensetzung nach Anspruch 1, worin Verbindung (a) (Meth)acrylsäure ist.

3. Zusammensetzung nach Anspruch 1, worin Verbindung (a) das Reaktionsprodukt (I) eines C₁₋₅-Alkylesters von (Meth)acrylsäure, der mit einer zur Reaktion mit einer Carbonsäuregruppe fähigen funktionellen Gruppe substituiert ist, oder eines reaktiven Derivats davon mit (II) einer Dicarbonsäure oder einem reaktiven Derivat davon ist.

4. Zusammensetzung nach Anspruch 3, worin der Alkylester (I) Hydroxyethylacrylat oder -methacrylat ist.

5. Zusammensetzung nach Anspruch 3 oder 4, worin die Dicarbonsäure (II) Phthalsäure oder Maleinsäure oder ein reaktives Derivat davon ist.

6. Zusammensetzung nach einem der vorangegangenen Ansprüche, worin Verbindung (b) das Reaktionsprodukt (III) einer Verbindung mit zumindest einer Allylethergruppe und einer zur Reaktion mit einer Carbonsäuregruppe fähigen funktionellen Gruppe oder eines reaktiven Derivats davon mit (IV) einer Dicarbonsäure oder einem reaktiven Derivat davon ist.

7. Zusammensetzung nach Anspruch 6, worin die Allyletherverbindung (III) nur die funktionelle Gruppe aufweist, wobei diese eine Hydroxylgruppe ist.

8. Zusammensetzung nach Anspruch 6 oder 7, worin die Allyletherverbindung (III) zumindest zwei Allylethergruppen aufweist.

9. Zusammensetzung nach Anspruch 6 oder 7, worin die Allyletherverbindung (III) aus Trimethylolpropanallylether, Trimethylolpropandiallylether, Trimethylolethandiallylether, Ethylenglykolallylether, Diethylenglykolallylether, Glycerindiallylether, 1,2,6-Hexantrioldiallylether und Pentaerythrittriallylether ausgewählt ist.

10. Zusammensetzung nach einem der Ansprüche 6 bis 9, worin die Dicarbonsäure (IV) Phthalsäure oder Maleinsäure oder ein reaktives Derivat davon ist.

11. Zusammensetzung nach einem der vorangegangenen Ansprüche, worin Reste der Verbindung mit Vinyl-Unsättigung (a) und der Verbindung mit Allyl-Unsättigung (b) im gesamten Allylvinylesterharz in einem Molverhältnis zwischen Verbindung (a) und Verbindung (b) von 90:10 bis 10:90 im gesamten Allylvinylesterharz enthalten sind.

12. Zusammensetzung nach einem der vorangegangenen Ansprüche, worin zumindest einer der Reste (c) eine Epoxy-Molmasse von ≤ 750 aufweist.

13. Zusammensetzung nach einem der vorangegangenen Ansprüche, worin zumindest einer der Reste (c) ein Diglycidylether einer Bisphenolverbindung ist.

14. Zusammensetzung nach einem der vorangegangenen Ansprüche, worin zumindest eine der gebundenen Halbestergruppen (d) von Phthalsäure oder Maleinsäure oder einem Derivat davon stammt.

15. Zusammensetzung nach einem der vorangegangenen Ansprüche, worin die oder zumindest eine ungesättigte Esterverbindung zusätzlich zumindest einen von einem Glykol stammenden Rest umfasst.

16. Zusammensetzung nach einem der vorangegangenen Ansprüche, worin zumindest ein Teil der Monomerkomponente (B) ein (Meth)acrylat-Monomer ist.

17. Zusammensetzung nach Anspruch 16, worin die gesamte Monomerkomponente (B) ein (Meth)acrylat-Monomer ist.

18. Zusammensetzung nach Anspruch 16 oder 17, worin das (Meth)acrylat-Monomer zumindest zwei (Meth)acrylatgruppen enthält.

19. Zusammensetzung nach Anspruch 18, worin das (Meth)acrylat-Monomer 1,3-Butylenglykoldimethacrylat ist.

20. Zusammensetzung nach Anspruch 15, worin die Monomerkomponente (B) ein Gemisch aus einem mono-, di- oder trifunktionellen (Meth)acrylatmonomer und einem aromatischen Vinylmonomer ist.

21. Zusammensetzung nach Anspruch 20, worin die Monomerkomponente (B) ein Gemisch aus Styrol und 1,3-Butylenglykoldimethacrylat ist.

22. Zusammensetzung nach einem der vorangegangenen Ansprüche, die zusätzlich einen radikalischen Initiator umfasst.

23. Zusammensetzung nach Anspruch 22, worin der radikalische Initiator ein Peroxid-Initiator ist, der aus Benzoylperoxid und Ketonperoxiden ausgewählt ist.

24. Zusammensetzung nach einem der Ansprüche 14 bis 23, die zusätzlich einen Härtungsbeschleuniger umfasst.

25. Zusammensetzung nach Anspruch 24, worin der Härtungsbeschleuniger ein Amin ist.

26. Zusammensetzung nach Anspruch 25, worin das Amin ein tertiäres aromatisches Amin ist.

27. Zusammensetzung nach Anspruch 25, worin das Amin ein Epoxy-Amin-Addukt ist.

28. Zusammensetzung nach Anspruch 27, worin das Amin des Epoxyharzaddukts ein primäres aromatisches Amin ist.

29. Zusammensetzung nach Anspruch 27 oder 28 in Abhängigkeit von Anspruch 23, worin der Peroxidinitiator Benzoylperoxid ist.

30. Zusammensetzung nach Anspruch 24 in Abhängigkeit von Anspruch 23, worin der Peroxidinitiator ein Ketonperoxid ist und der Härtungsbeschleuniger Kobaltoctoat oder -naphthenat ist.

31. Zusammensetzung nach Anspruch 30, die zusätzlich ein Amin als Co-Beschleuniger umfasst.

32. Verfahren zur Herstellung einer vernetzbaren Allylvinylester-Harzzusammensetzung, wobei das Verfahren das Vermischen von Folgendem umfasst:
(A) einer Allylvinylester-Harzkomponente, die zumindest zwei Spezies von endständig ungesättigten Resten umfasst, die jeweils abgeleitet sind von
(a) einer Verbindung mit zumindest einer endständig ungesättigten Gruppe, die Vinyl-Unsättigung bereitstellt, und einer Carbonsäuregruppe oder einem reaktiven Derivat davon, und
(b) einer Verbindung mit zumindest einer endständig ungesättigten Gruppe, die Allyl-Unsättigung bereitstellt, und einer Carbonsäuregruppe oder einem reaktiven Derivat davon,
wobei jede Spezies von endständig ungesättigten Resten unabhängig voneinander in zumindest einer ungesättigten Esterverbindung des Allylvinylesterharzes enthalten ist und die oder jede ungesättigte Esterverbindung zusätzlich umfasst:
(c) zumindest einen Rest, der von einer Epoxyverbindung herrührt, die zumindest zwei Epoxygruppen aufweist und zur Reaktion mit einer Carbonsäure oder einem reaktiven Derivat davon fähig ist, und
(d) zumindest eine Halbestergruppe, die an eine ungesättigte Esterkette der ungesättigen Esterverbindung gebunden ist;
(B) einer ethylenisch ungesättigten Monomerkomponente, die mit der Allylvinylharz-Komponente vernetzbar ist, und zusätzlich gegebenenfalls
(C) zumindest eines von einem Beschleuniger und einem radikalischen Initiator.

33. Verfahren nach Anspruch 32, wobei das Verfahren folgende vorbereitende Schritte umfasst:
(I) das jeweilige Umsetzen
(a) einer Verbindung mit zumindest einer endständig ungesättigten Gruppe, die Vinyl-Unsättigung bereitstellt, und einer Carbonsäuregruppe oder einem reaktiven Derivat davon und (b) einer Verbindung mit zumindest einer endständig ungesättigten Gruppe, die Allyl-Unsättigung bereitstellt, und einer Carbonsäuregruppe oder einem reaktiven Derivat davon mit (c) einer Epoxyverbindung, die zumindest zwei Epoxygruppen aufweist, um zumindest eine ungesättigte Esterverbindung zu bilden, an die zumindest eine Hydroxylgruppe gebunden ist, wobei die ungesättigte Esterverbindung - oder die ungesättigten Esterverbindungen gemeinsam - endständige Allyl- und Vinylreste bereitstellt bzw. -stellen, um ein Allylvinylesterharz zu bilden; und
(II) das Umsetzen des Allylvinylesterharzes aus Schritt (I) mit (d) einer zur Reaktion mit der oder jeder gebundenen Hydroxylgruppe fähigen Dicarbonsäure oder einem reaktiven Derivat davon, um an der oder jeder Verbindung zumindest eine gebundene Halbestergruppe zu bilden und dadurch die Allylvinylesterharz-Komponente zu bilden.

34. Allylvinylesterharz-Komponente, die zumindest zwei Spezies von endständig ungesättigten Resten umfasst, die jeweils abgeleitet sind von
(a) einer Verbindung mit zumindest einer endständig ungesättigten Gruppe, die Vinyl-Unsättigung bereitstellt, und einer Carbonsäuregruppe oder einem reaktiven Derivat davon, wobei die Verbindung (a) das Reaktionsprodukt (I) eines C₁₋₅-Alkylesters von (Meth)acrylsäure, der mit einer zur Reaktion mit einer Carbonsäuregruppe fähigen funktionellen Gruppe substituiert ist, oder eines reaktiven Derivats davon, mit (II) einer Dicarbonsäure oder einem reaktiven Derivat davon ist, und
(b) einer Verbindung mit zumindest einer endständig ungesättigten Gruppe, die Allyl-Unsättigung bereitstellt, und einer Carbonsäuregruppe oder einem reaktiven Derivat davon,
wobei jede Spezies von endständig ungesättigten Resten unabhängig voneinander in zumindest einer ungesättigten Esterverbindung des Allylvinylesterharzes enthalten ist und die oder jede ungesättigte Esterverbindung zusätzlich umfasst:
(c) zumindest einen Rest, der von einer Epoxyverbindung herrührt, die zumindest zwei Epoxygruppen aufweist und zur Reaktion mit einer Carbonsäure oder einem reaktiven Derivat davon fähig ist, und
(d) zumindest eine Halbestergruppe, die an eine ungesättigte Esterkette der ungesättigen Esterverbindung gebunden ist.

35. Allylvinylesterharz nach Anspruch 34, worin die Alkylester-Komponente (I) von Verbindung (a) von Hydroxylethylacrylat oder-methacrylat stammt.

36. Allylvinylesterharz nach Anspruch 34 oder 35, worin die Dicarbonsäure-Komponente (II) von Verbindung (a) Phthalsäure oder Maleinsäure oder ein reaktives Derivat davon ist.

37. Allylvinylesterharz nach einem der vorangegangenen Ansprüche, worin Verbindung (b) das Reaktionsprodukt (III) einer Verbindung mit zumindest einer Allylethergruppe und einer zur Reaktion mit einer Carbonsäuregruppe fähigen funktionellen Gruppe oder einem reaktiven Derivat davon mit (IV) einer Dicarbonsäure oder einem reaktiven Derivat davon ist.

38. Allylvinylesterharz nach Anspruch 37, worin die Allyletherverbindung (III) nur eine funktionelle Gruppe aufweist, wobei die funktionelle Gruppe eine Hydroxylgruppe ist.

39. Allylvinylester nach Anspruch 37 oder 38, worin die Allyletherverbindung (III) zumindest zwei Allylethergruppen aufweist.

40. Allylvinylesterharz nach Anspruch 37, worin die Allyletherverbindung (III) aus Trimethylolpropanallylether, Trimethylolpropandiallylether, Trimethylolethandiallylether, Ethylenglykolallylether, Diethylenglykolallylether, Glycerindiallylether, 1,2,6-Hexantrioldiallylether und Pentaerythrittriallylether ausgewählt ist.

41. Allylvinylesterharz nach einem der Ansprüche 37 bis 40, worin die Dicarbonsäure (IV) Phthalsäure oder Maleinsäure oder ein reaktives Derivat davon ist.

42. Allylvinylesterharz nach einem der Ansprüche 34 bis 41, worin Reste der Verbindung (a) mit Vinyl-Unsättigung und der Verbindung (b) mit Allyl-Unsättigung im gesamten Allylvinylesterharz in einem Molverhältnis zwischen Verbindung (a) und Verbindung (b) von 90:10 bis 10:90 enthalten sind.

43. Allylvinylesterharz nach einem der Ansprüche 34 bis 42, worin zumindest einer der Reste (c) eine Epoxy-Molmasse von ≤ 750 aufweist.

44. Allylvinylesterharz nach einem der Ansprüche 34 bis 43, worin zumindest einer der Reste (c) ein Diglycidylether einer Bisphenolverbindung ist.

45. Allylvinylesterharz nach einem der Ansprüche 34 bis 44, worin zumindest eine der gebundenen Halbestergruppen (d) von Phthalsäure oder Maleinsäure oder einem Derivat davon stammt.

46. Allylvinylesterharz nach einem der Ansprüche 34 bis 45, worin die oder zumindest eine ungesättigte Esterverbindung zusätzlich einen von einem Glykol stammenden Rest umfasst.

47. Verfahren zur Herstellung eines Allylvinylesterharzes, wobei das Verfahren folgende Schritte umfasst:
(I) das jeweilige Umsetzen
(a) einer Verbindung mit zumindest einer endständig ungesättigten Gruppe, die Vinyl-Unsättigung bereitstellt, und einer Carbonsäuregruppe oder einem reaktiven Derivat davon, wobei die Verbindung (a) das Reaktionsprodukt (I) eines C₁₋₅-Alkylesters von (Meth)acrylsäure, der mit einer zur Reaktion mit einer Carbonsäuregruppe fähigen funktionellen Gruppe substituiert ist, oder eines reaktiven Derivats davon, mit (II) einer Dicarbonsäure oder einem reaktiven Derivat davon ist, und (b) einer Verbindung mit zumindest einer endständig ungesättigten Gruppe, die Allyl-Unsättigung bereitstellt, und einer Carbonsäuregruppe oder einem reaktiven Derivat davon mit (c) einer Epoxyverbindung, die zumindest zwei Epoxygruppen aufweist, um zumindest eine ungesättigte Esterverbindung zu bilden, an die zumindest eine Hydroxylgruppe gebunden ist, wobei die ungesättigte Esterverbindung - oder die ungesättigten Esterverbindungen gemeinsam - endständige Allyl- und Vinylreste bereitstellt bzw. -stellen, um ein Allylvinylesterharz zu erhalten; und
(II) das Umsetzen des Allylvinylesterharzes aus Schritt (I) mit (d) einer zur Reaktion mit der oder jeder gebundenen Hydroxylgruppe fähigen Dicarbonsäure oder einem reaktiven Derivat davon, um an der oder jeder Verbindung zumindest eine gebundene Halbestergruppe zu bilden.

## Revendications

1. Composition de résine d'allyl vinyl ester réticulable comprenant :
(A) un composant de résine d'allyl vinyl ester comprenant au moins deux espèces d'un résidu à insaturation terminale dérivées respectivement de
(a) un composé ayant au moins un groupe à insaturation terminale produisant une insaturation vinylique et un groupe acide carboxylique ou son dérivé réactif et
(b) un composé ayant au moins un groupe à insaturation terminale produisant une insaturation allylique et un groupe acide carboxylique ou son dérivé réactif,
chacune des espèces du résidu à insaturation terminale est présente, indépendamment, dans au moins un composé ester insaturé de ladite résine d'allyl vinyl ester et le ou chaque composé d'ester insaturé comprenant additionnellement
(c) au moins un résidu dérivé d'un composé époxy ayant au moins deux groupes époxy et capable de réaction avec un acide carboxylique ou son dérivé réactif, et
(d) au moins un groupe hémi-ester pendant d'une chaîne d'ester insaturé du composé d'ester insaturé ;
(B) un composant d'un monomère à insaturation éthylénique réticulable avec le composant de résine d'allyl vinyle.

2. Composition selon la revendication 1, où le composé (a) est l'acide (méth)acrylique

3. Composition selon la revendication 1, où le composé (a) est le produit réactionnel de (I) un alkyl ester C₁₋₅ d'acide (méth)acrylique substitué par un groupe fonctionnel capable de réaction avec un groupe acide carboxylique ou son dérivé réactif et (II) un acide dicarboxylique ou son dérivé réactif.

4. Composition selon la revendication 3, où ledit alkyl ester (I) est l'hydroxy éthyl acrylate ou méthacrylate.

5. Composition selon la revendication 3 ou la revendication 4, où l'acide dicarboxylique (II) est l'acide phtalique ou maléique ou son dérivé réactif.

6. Composition selon toute revendication précédente, où le composé (b) est le produit réactionnel de (III) un composé ayant au moins un groupe allyl éther et un groupe fonctionnel capable de réaction avec un groupe acide carboxylique ou son dérivé réactif et (IV) un acide dicarboxylique ou son dérivé réactif.

7. Composition selon la revendication 6, où ledit composé d'allyl éther (III) n'a qu'un dit groupe fonctionnel, lequel groupe fonctionnel est un groupe hydroxyle.

8. Composition selon la revendication 6 ou la revendication 7, où ledit composé d'allyl éther (III) a au moins deux groupes allyl éther.

9. Composition selon la revendication 6 ou la revendication 7, où ledit composé d'allyl éther (III) est sélectionné parmi triméthylol propane allyl éther, triméthylol propane diallyl éther, triméthylol éthane diallyl éther, éthylène glycol allyl éther, diéthylène glycol allyl éther, glycérol diallyl éther, 1,2,6-hexane triol diallyl éther et pentaérythritol tri-allyl éther.

10. Composition selon l'une quelconque des revendications 6 à 9, où l'acide dicarboxylique (IV) est l'acide phtalique ou maléique ou son dérivé réactif.

11. Composition selon toute revendication précédente, où des résidus dudit composé à insaturation vinylique (a) et dudit composé à insaturation allylique (b) sont présents dans le total de ladite résine d'allyl vinyl ester à un rapport molaire du composé (a): composé (b) de 90:10 à 10:90.

12. Composition selon l'une quelconque des revendications précédentes, où au moins un dit résidu (c) a une masse molaire époxy ≤ 750.

13. Composition selon toute revendication précédente, où au moins un dit résidu (c) est un diglycidyl éther d'un composé de bisphénol.

14. Composition selon toute revendication précédente ou au moins un dit groupe hémi-ester pendant (d) est dérivé de l'acide phtalique ou maléique ou un dérivé de celui-ci.

15. Composition selon toute revendication précédente, où le ou au moins un composé d'ester insaturé comprend additionnellement au moins un résidu dérivé d'un glycol.

16. Composition selon toute revendication précédente, où au moins une proportion dudit composant monomère (B) est un monomère de (méth)acrylate.

17. Composition selon la revendication 16, où la totalité dudit composant monomère (B) est un monomère de (méth)acrylate.

18. Composition selon la revendication 16 ou la revendication 17, où le monomère de (méth)acrylate contient au moins deux groupes (méth)acrylate.

19. Composition selon la revendication 18, où le monomère de (méth)acrylate est 1,3-butylène glycol diméthacrylate.

20. Composition selon la revendication 15, où le composant monomère (B) est un mélange d'un monomère de (méth)acrylate mono-, di- ou trifonctionnel et d'un monomère vinylique aromatique.

21. Composition selon la revendication 20, où le composant monomère (B) est un mélange de styrène et de 1,3 butylène glycol diméthacrylate.

22. Composition selon toute revendication précédente qui comprend additionnellement un initiateur de radicaux libres.

23. Composition selon la revendication 22, où l'initiateur de radicaux libres est un initiateur de peroxyde sélectionné parmi le peroxyde de benzoyle et les peroxydes de cétone.

24. Composition selon l'une quelconque des revendications 14 à 23, qui comprend additionnellement un accélérateur de durcissement.

25. Composition selon la revendication 24, où l'accélérateur de durcissement est une amine.

26. Composition selon la revendication 25, où l'amine est une amine aromatique tertiaire.

27. Composition selon la revendication 25, où l'amine est un produit d'addition époxy-amine.

28. Composition selon la revendication 27, où l'amine du produit d'addition de résine époxy est une amine aromatique primaire.

29. Composition selon la revendication 27 ou la revendication 28, telle que dépendant de la revendication 23, où l'initiateur de peroxyde est le peroxyde de benzoyle.

30. Composition selon la revendication 24, telle que dépendant de la revendication 23, où l'initiateur de peroxyde est un peroxyde de cétone et l'accélérateur de durcissement est de l'octoate ou du naphténate de cobalt.

31. Composition selon la revendication 30, qui comprend additionnellement une amine comme co-accélérateur.

32. Méthode de préparation d'une composition de résine d'allyl vinyl ester réticulable, laquelle méthode comprend le mélange de chacun de :
(A) un composant de résine d'allyl vinyl ester comprenant au moins deux espèces de résidu à insaturation terminale dérivées respectivement de
(a) un composé ayant au moins un groupe à insaturation terminale produisant une insaturation vinylique et un groupe acide carboxylique ou son dérivé réactif et
(b) un composé ayant au moins un groupe à insaturation terminale produisant une insaturation allylique et un groupe acide carboxylique ou son dérivé réactif,
chacune desdites espèces du résidu à insaturation terminale est présente, indépendamment, dans au moins un composé d'ester insaturé de ladite résine d'allyl vinyl ester et le ou chaque composé d'ester insaturé comprenant additionnellement
(c) au moins un résidu dérivé d'un composé époxy ayant au moins deux groupes époxy et capable de réaction avec un acide carboxylique ou son dérivé réactif, et
(d) au moins un groupe hémi-ester pendant d'une chaîne d'ester insaturé du composé d'ester insaturé ;
(B) un composant d'un monomère à insaturation éthylénique réticulable avec le composant de résine d'allyl vinyle, et additionnellement, facultativement
(C) au moins l'un d'un accélérateur et d'un initiateur de radicaux libres.

33. Méthode selon la revendication 32, laquelle méthode comprend les étapes préliminaires de:
(*I*) réaction de chacun de
(a) un composé ayant au moins un groupe à insaturation terminale produisant une insaturation vinylique et un groupe acide carboxylique ou son dérivé réactif et (b) un composé ayant au moins un groupe à insaturation terminale produisant une insaturation allylique et un groupe acide carboxylique ou son dérivé réactif avec (c) un composé époxy ayant au moins deux groupes époxy pour former au moins un composé ester insaturé ayant au moins un groupe hydroxyle pendant, ledit composé ester insaturé ou lesdits composés ester insaturé ensemble produisant des résidus allyle et vinyle terminaux pour produire une résine d'allyl vinyl ester ; et
(*II*) réaction de ladite résine d'allyl vinyl ester de l'étape (*I*) avec (d) un acide dicarboxylique ou son dérivé réactif capable de réaction avec le ou chaque groupe hydroxyle pendant pour former sur le ou chaque dit composé au moins un groupe hémi-ester pendant et ainsi produire ledit composant de résine d'allyl vinyl ester.

34. Composant de résine d'allyl vinyl ester comprenant au moins deux espèces d'un résidu à insaturation terminale dérivées respectivement de
(a) un composé ayant au moins un groupe à insaturation terminale produisant une insaturation vinylique et un groupe acide carboxylique ou son dérivé réactif, lequel composé (a) est le produit réactionnel de (I) un alkyl ester C₁₋₅ d'acide (méth)acrylique substitué par un groupe fonctionnel capable de réaction avec un groupe acide carboxylique ou son dérivé réactif et (II) un acide dicarboxylique ou son dérivé réactif, et
(b) un composé ayant au moins un groupe à insaturation terminale produisant une insaturation allylique et un groupe acide carboxylique ou son dérivé réactif,
chacune de ladite espèce de résidu à insaturation terminale est présente, indépendamment, dans au moins un composé d'ester insaturé de ladite résine d'allyl vinyl ester et le ou chaque composé d'ester insaturé comprenant additionnellement
(c) au moins un résidu dérivé d'un composé époxy ayant au moins deux groupes époxy et capable de réaction avec un acide carboxylique ou son dérivé réactif, et
(d) au moins un groupe hémi-ester pendant d'une chaîne d'ester insaturé du composé d'ester insaturé.

35. Résine d'allyl vinyl ester selon la revendication 34, où le composant d'alkyl ester (I) du composé (a) est dérivé d'hydroxyl éthyl acrylate ou méthacrylate.

36. Résine d'allyl vinyl ester selon la revendication 34 ou la revendication 35, où le composant d'acide dicarboxylique (II) du composé (a) est l'acide phtalique ou maléique ou son dérivé réactif.

37. Résine d'allyl vinyl ester selon toute revendication précédente où le composé (b) est le produit de réaction de (III) un composé ayant au moins un groupe allyl éther et un groupe fonctionnel capable de réaction avec un groupe acide carboxylique ou son dérivé réactif et (IV) un acide dicarboxylique ou son dérivé réactif.

38. Résine d'allyl vinyl ester selon la revendication 37, où ledit composé d'allyl éther (III) n'a qu'un dit groupe fonctionnel, lequel groupe fonctionnel est un groupe hydroxyle.

39. Résine d'allyl vinyl ester selon la revendication 37 ou la revendication 38, où ledit composé d'allyl éther (III) a au moins deux groupes allyl éther.

40. Résine d'allyl vinyl ester selon la revendication 37, où ledit composé d'allyl éther (III) est sélectionné parmi triméthylol propane allyl éther, triméthylol propane diallyl éther, triméthylol éthane diallyl éther, éthylène glycol allyl éther, diéthylène glycol allyl éther, glycérol diallyl éther, 1,2,6-hexane triol diallyl éther et pentaérythritol tri-allyl éther.

41. Résine d'allyl vinyl ester selon l'une quelconque des revendications 37 à 40, où l'acide dicarboxylique (IV) est l'acide phtalique ou maléique ou un dérivé réactif de celui-ci.

42. Résine d'allyl vinyl ester selon l'une quelconque des revendications 34 à 41, où des résidus dudit composé à insaturation vinylique (a) et dudit composé à insaturation allylique (b) sont présents dans le total de ladite résine d'allyl vinyl ester à un rapport molaire ou composé (a) : composé (b) de 90:10 à 10:90.

43. Résine d'allyl vinyl ester selon l'une quelconque des revendications 34 à 42, où au moins un dit résidu (c) a une masse molaire époxy ≤ 750.

44. Résine d'allyl vinyl ester selon l'une quelconque des revendications 34 à 43, où au moins un dit résidu (c) est un diglycidyl éther d'un composé de bisphénol.

45. Résine d'allyl vinyl ester selon l'une quelconque des revendications 34 à 44, où au moins un dit groupe hémi-ester pendant (d) est dérivé de l'acide phtalique ou maléique ou son dérivé.

46. Résine d'allyl vinyl ester selon l'une quelconque des revendications 34 à 45, où le ou au moins un composé d'ester insaturé comprend additionnellement au moins un résidu dérivé d'un glycol.

47. Méthode de préparation d'une résine d'allyl vinyl ester, laquelle méthode comprend les étapes de :
(*I*) réaction de chacun de
(a) un composé ayant au moins un groupe à insaturation terminale produisant une insaturation vinylique et un groupe acide carboxylique ou son dérivé réactif, lequel composé (a) est le produit réactionnel de (I) un alkyle ester C₁₋₅ de l'acide (méth)acrylique substitué par un groupe fonctionnel capable de réaction avec un groupe acide carboxylique ou son dérivé réactif et (II) un acide dicarboxylique ou son dérivé réactif et (b) un composé ayant au moins un groupe à insaturation terminale produisant une insaturation allylique et un groupe acide carboxylique ou son dérivé réactif avec (c) un composé époxy ayant au moins deux groupes époxy pour former au moins un composé ester insaturé ayant au moins un groupe hydroxyle pendant, ledit composé ester insaturé ou lesdits composés ester insaturé ensemble produisant des résidus allyl et vinyl terminaux pour obtenir une résine d'allyl vinyl ester ; et
(*II*) réaction de ladite résine d'allyl vinyl ester de l'étape (1) avec (d) un acide dicarboxylique ou son dérivé réactif capable de réaction avec le ou chaque dit groupe hydroxyle pendant pour former sur le ou chaque dit composé au moins un groupe hémi-ester pendant.
